# EUROPEAN PATENT APPLICATION

(11) **EP 1 149 724 A1**
(43) Date of publication of application: **31.10.2001**
(21) Application number: 01110389.2
(22) Date of filing: 26.04.2001
(51) Int. Cl.: B60K 41/00, F01N 11/00

(54) **Catalyst deterioration detecting apparatus and method for use with vehicles**

(30) Priority: 27.04.2000 JP 2000127970
(71) Applicant: TOYOTA JIDOSHA KABUSHIKI KAISHA, Aichi-ken 471-8571 (JP)
(72) Inventor: Uchida, Takahiro, Toyota-shi, Aichi-ken 471-8571 (JP)
(74) Representative: Leson, Thomas Johannes Alois, Dipl.-Ing.

(57) **Abstract**

A catalyst deterioration detecting apparatus and method detects a deteriorated functional state of an catalyst (29) provided in an exhaust passage (28) of an internal combustion engine (1) of a vehicle. A controller (10) of the vehicle calculates a required total output that is required for driving the vehicle, and an output adjusting device (2), such as, for example, an electric motor, cooperates with the engine to provide the required total output. The catalyst is diagnosed so as to determine whether the catalyst is in a deteriorated functional state. During the diagnosis of the catalyst, the controller restricts the output of the engine to be held within a predetermined range, and changes the output of the output adjusting device as needed so as to provide the required total output.

## Description

### BACKGROUND OF THE INVENTION

### 1. Field of Invention

The invention relates to a catalyst deterioration detecting apparatus and method adapted to detect deterioration of an emission purifying catalyst used on a vehicle, for example, a hybrid automotive vehicle.

### 2. Description of Related Art

An emission purifying catalyst is generally provided in an exhaust passage of an internal combustion engine of an automotive vehicle, for purifying exhaust gas emitted from the engine by removing or reducing unburned fuel, carbon monoxide, nitrogen oxides, and other components contained in the exhaust gas. In order to suppress or reduce an amount of increase of the remaining undesirable components discharged into the atmosphere due to deterioration of the catalyst, it has been proposed to provide the internal combustion engine with a catalyst deterioration detecting apparatus adapted to detect a deteriorated functional state of the catalyst. For assuring high accuracy of diagnosis as to whether the catalyst has been deteriorated, it is preferable to perform the diagnosis while the amount or degree of variation in the output of the engine is relatively small. On the other hand, the output of the engine is required to vary according to an operating or running condition of the vehicle desired by an operator or driver of the vehicle. Accordingly, it is usually difficult for the catalyst deterioration detecting apparatus to perform the diagnosis in an appropriate condition of the vehicle. In view of this situation, various attempts have been made to assure an appropriate opportunity that permits the catalyst deterioration detecting apparatus to achieve accurate diagnosis as to whether the catalyst has been deteriorated. An example of a catalyst deterioration detecting apparatus resulting from such attempts is disclosed in JP-A-9-144532.

The catalyst deterioration detecting apparatus disclosed in JP-A-9-144532 reduces the amount of variation of the output of the internal combustion engine by reducing or restricting the amount of change of a throttle valve (e.g., throttle opening) of the engine with a change in the amount of operation of an accelerator pedal provided on the vehicle, during an operation of the catalyst deterioration detecting apparatus to determine whether the catalyst is in a deteriorated functional state. For instance, the rate of increase of the opening of the throttle valve is lowered, or an opening action of the throttle valve is temporarily inhibited, during the diagnosis as to whether the catalyst is in the deteriorated functional state. This arrangement of the catalyst deterioration detecting apparatus, however, may prevent the engine from providing the output desired by the vehicle operator.

### SUMMARY OF THE INVENTION

It is therefore an object of the invention to provide a catalyst deterioration detecting apparatus and method of a vehicle, which is able to accurately detect a deteriorated functional state of a catalyst provided in an exhaust passage of an internal combustion engine at an early opportunity.

To accomplish the above and/or other objects, one aspect of the invention provides a catalyst deterioration detecting apparatus and method for detecting a deteriorated functional state of a catalyst provided in an exhaust passage of an internal combustion engine of a vehicle. A controller of the vehicle calculates a required total output that is required for driving the vehicle, and an output adjusting device, for example, an electric motor cooperates with the internal combustion engine to provide the required total output. The catalyst deterioration detecting apparatus performs a diagnostic operation to diagnose the catalyst so as to determine whether the catalyst is in a deteriorated functional state. During the diagnostic operation of the catalyst, the output of the internal combustion engine is restricted to be held within a predetermined range, while the output of the output adjusting device is changed as needed so as to provide the required total output calculated as described above.

In a preferred embodiment of the invention, the vehicle has a hybrid drive device including the engine and an electric motor, and the electric motor functions as the output adjusting device. The controller of the vehicle calculates an output of the internal combustion engine and an output of the electric motor depending upon an operating state of the vehicle. In this case, during the diagnostic operation, the outputs of the engine and the electric motor are controlled, irrespective of the outputs calculated based on the operating state of the vehicle, so as to restrict the output of the engine while changing the output of the electric motor as needed such that a sum of the restricted output of the engine and the changed output of the electric motor is equal to the required total output.

In the catalyst deterioration detecting apparatus and method described above, the outputs of the internal combustion engine and the electric motor are controlled during diagnostic operation to diagnose the catalyst, so that the output of the engine is restricted to remain within the predetermined range while the output of the electric motor is changed so that a sum of the restricted output of the engine and the changed output of the electric motor is equal to the required total output. Since the engine is operated with a reduced amount of change of its output, the catalyst can be diagnosed with a higher degree of accuracy, without a significant adverse influence of the engine output change on the determination as to whether the catalyst is in a deteriorated functional state. Further, the catalyst deterioration detecting apparatus and method of the invention permits the above-indicated determination to be completed in a relatively short time. Moreover, the restriction of the output of the engine does not sacrifice the driving performance or driveability of the vehicle, because the output of the electric motor is changed so that the sum of the restricted output of the engine and the changed output of the electric motor is equal to the required total output of the hybrid vehicle.

### BRIEF DESCRIPTION OF THE DRAWINGS

The invention will be described in conjunction with the following drawings in which like reference numerals designate like elements and wherein:
Fig. 1 is a block diagram illustrating a hybrid automotive vehicle provided with a catalyst deterioration detecting apparatus according to one embodiment of this invention;
Fig. 2 is a perspective view of a power distributing mechanism of a hybrid drive device of the vehicle, and other components of the vehicle of Fig. 1, which includes an emission purifying catalyst;
Fig. 3 is a flowchart illustrating a routine executed to turn on or off a DETECTING CONDITION flag used by the catalyst deterioration detecting apparatus to initiate its normal detecting operation;
Fig. 4 is a flowchart illustrating a catalyst deterioration detecting routine executed to perform a diagnostic operation that diagnoses whether the catalyst is in a deteriorated functional state;
Fig. 5A is a graph indicating a relationship among an operator's desired vehicle output, an output of the engine and an output of the electric motor, when the catalyst deterioration detecting apparatus is not in operation;
Fig. 5B is a graph indicating a relationship among the operator's desired vehicle output and the outputs of the engine and electric motor while the catalyst deterioration detecting apparatus is in operation;
Fig. 6 is a flowchart illustrating a routine executed to turn on or off a COMPULSORY DIAGNOSIS flag used by the catalyst-detection detecting apparatus to initiate its compulsory diagnosis; and
Fig. 7 is a flowchart illustrating a routine executed by the main control unit to effect the compulsory diagnosis.

### DETAILED DESCRIPTION OF PREFERRED EMBODIMENTS

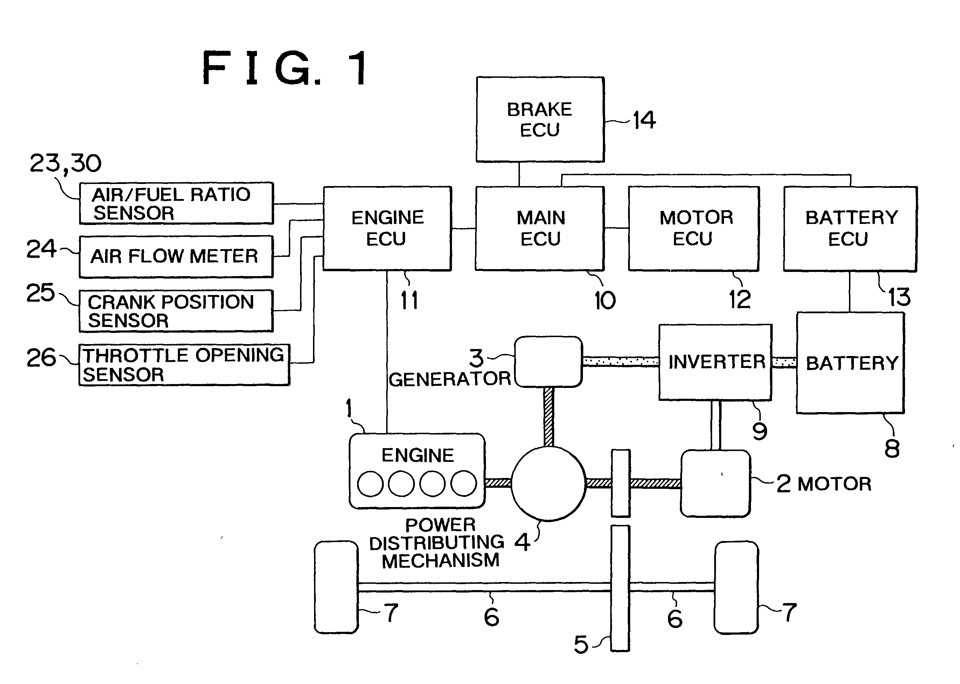

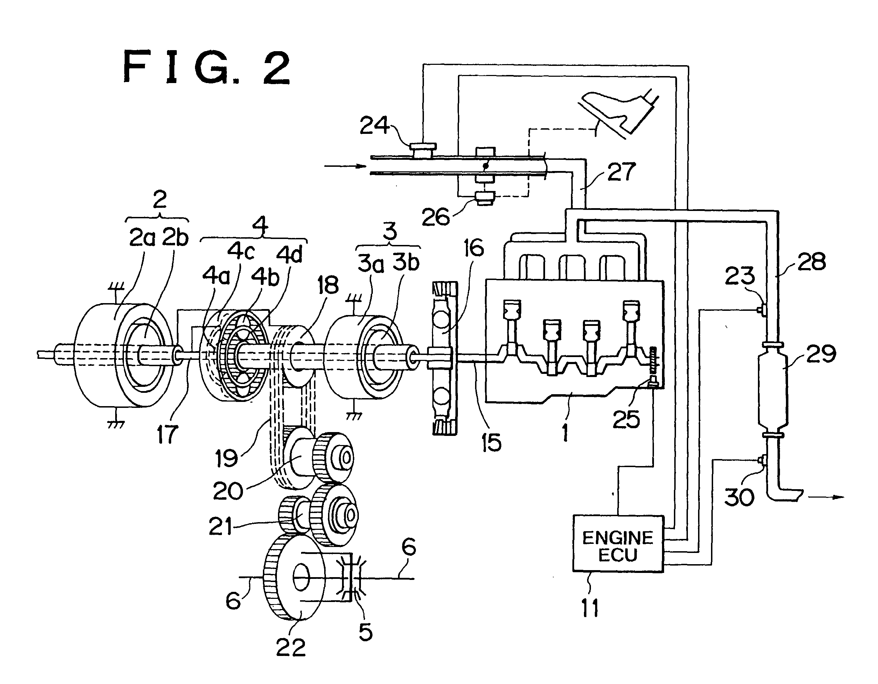

Referring first to Fig. 1, there is illustrated a hybrid automotive vehicle having a hybrid drive device and a catalyst deterioration detecting apparatus according to one embodiment of the invention. The hybrid drive device includes an internal combustion engine 1 and an electric motor 2. The catalyst deterioration detecting apparatus is adapted to diagnose an emission purifying catalyst 29 provided in an exhaust passage 28 connected to the engine 1 (see Fig. 2).

The hybrid drive device of the hybrid vehicle further includes an electric generator 3 operable with an output of the engine 1 (i.e., powered by the engine 1) to generate electric energy, and a power distributing mechanism 4 operatively connected to the engine 1, the electric motor 2 and the electric generator 3. The power distributing mechanism 4 is arranged to distribute the output of the engine 1 to the electric generator 3 and to the drive wheels 7 of the vehicle, as needed, and to transmit an output of the electric motor 2 to the drive wheels 7. The power distributing mechanism 4 also functions as a power transmission capable of transmitting a rotary motion of the engine 1 and/or electric motor 2 to the drive wheels 7 through a differential gear 5 and drive axles 6, at a controlled speed ratio. The construction of the power distributing mechanism 4 will be described in detail with reference to Fig. 2.

The electric motor 2 is a synchronous alternating-current (AC) motor operable with alternating current applied thereto. An inverter 9 is connected to the electric motor 2, a battery 8 and the electric generator 3. The inverter 9 functions to convert direct-current (DC) power received from the battery 8 into alternating-current (AC) power to be applied to the electric motor 2, and to convert AC power generated by the electric generator 3 into DC power to be stored in the battery 8. The electric generator 3 takes the form of a synchronous AC motor, which is basically identical in construction with the motor 2. The electric motor 2 is operated primarily for generating driving force for driving the vehicle, while the electric generator 3 is operated principally with an output of the engine 1, for generating an electric energy to be used by the motor 2.

Although the electric motor 2 mainly functions to generate driving force, the motor 2 also is able to generate electric energy by utilizing rotation of the drive wheels 7 (i.e., by means of regenerative braking). Namely, the motor 2 may convert kinetic energy of the drive wheels 7 into electric energy while applying a regenerative brake force to the drive wheels 7. The vehicle can be suitably braked, by utilizing this regenerative brake force in combination with a hydraulically operated brake provided for each wheel, and an "engine brake" well known in the art. On the other hand, the electric generator 3, which is usually operated with the output of the engine 1 to generate an electric energy, may function as an electric motor, with an electric energy received from the battery 8 through the inverter 9.

Referring next to Fig. 2, there is shown the hybrid drive device including the power distributing mechanism 4, engine 1, electric motor 2 and electric generator 3. In the present embodiment, the power distributing mechanism 4 takes the form of a planetary gear device, and will be referred to hereinafter as "planetary gear device 4". The planetary gear device 4 includes a sun gear 4a, planetary gears 4b disposed around the sun gear 4a, a ring gear 4c disposed radially outwardly of the planetary gears 4b, and a carrier 4d which supports the planetary gears 4b.

The engine 1 has a crankshaft 15 which is connected through a damper 16 to a center shaft 17 connected to the carrier 4d of the planetary gear device 4, so that the output of the engine 1 is transmitted to the carrier 4d through the crankshaft 15, damper 16 and center shaft 17. The electric motor 2 incorporates a stator 2a, and a rotor 2b which is connected to the ring gear 4c. The rotor 2b and the ring gear 4c are connected to a first gear 18. The output of the electric motor 2 transmitted to the ring gear 4c is transmitted to the drive axles 6 through the first gear 18, a transmission chain 19, a second gear 20, a third gear 21, a final gear 22 and the differential gear 5 indicated above.

Like the electric motor 2, the electric generator 3 incorporates a stator 3a, and a rotor 3b which is connected to the sun gear 4a of the planetary gear device 4. Thus, the output of the engine 1 is distributed by the planetary gear device 4, and is transmitted through the sun gear 4a to the rotor 3b of the electric generator 3. The output of the engine 1 is also distributed by the planetary gear device 4, to be transmitted to the drive axles 6 through the ring gear 4c and the other rotary elements indicated above. By controlling the amount of electric energy to be generated by the electric generator 3, thereby controlling the rotating speed of the sun gear 4a, the planetary gear device 4 can be used as a continuously variable transmission capable of controlling the ratio of the speed of the engine 1 and/or motor 2 to the speed of the drive axles 6. Further, the speed of the engine 1 can be controlled by controlling the amount of electric energy to be generated by the electric generator 3 (by controlling the amount of electric energy consumption of the electric generator 3 when the electric generator 3 is operated as an electric motor).

The hybrid drive device provided on the hybrid automotive vehicle described above has the following modes of operation: a MOTOR DRIVE mode, a HIGH-LOAD ENGINE-AND-MOTOR DRIVE mode, a FULL-POWER ENGINE-AND-MOTOR DRIVE mode; a REGENERATIVE BRAKING mode; and an ENGINE DRIVE & CHARGING mode. The MOTOR DRIVE mode is selected for starting the vehicle or driving the vehicle under a relatively low load. In the MOTOR DRIVE mode, the vehicle is driven with driving force generated by only the electric motor 2 operated with electric energy supplied from the battery 8. The electric motor 2 is capable of producing relatively large torque at a relatively low operating speed, and can be effectively utilized as a drive source for driving the vehicle in a low load condition. The HIGH-LOAD ENGINE-AND-MOTOR DRIVE mode is selected when the vehicle is driven at a relatively high speed under a relatively high load. In the HIGH-LOAD ENGINE-AND-MOTOR DRIVE mode, the engine 1 is operated to provide vehicle driving force, and the electric motor 2 is driven with electric power generated by the electric generator 3 that receives the output of the engine 1. Thus, the driving force produced by the engine 1 and the driving force produced by the electric motor 2 are used to operate or run the vehicle.

The FULL-POWER ENGINE-AND-MOTOR DRIVE mode is selected for driving the vehicle with further increased driving force, for example, upon full depression of the accelerator pedal. In the FULL-POWER ENGINE-AND-MOTOR DRIVE mode, the electric motor 2 is operated with electric energy generated by the electric generator 3 and electric energy supplied from the battery 8, and at the same time the engine 1 is operated so as to provide increased driving force, so that the vehicle is driven with both the driving force generated by the electric motor 2 and the drive force produced by the engine 1. The REGENERATIVE BRAKING mode is selected during deceleration, coasting or braking of the vehicle. In the REGENERATIVE BRAKING mode, the electric motor 2 is caused to generate electric energy by utilizing rotary motion of the drive wheels 7 (i.e., by converting kinetic energy of the drive wheels 7 into electric energy through regenerative braking), so that the vehicle is braked with a regenerative braking force produced by the motor 2. The ENGINE DRIVE & CHARGING mode is selected for running the vehicle with the engine 1 while the amount of electric energy stored in the battery 8 is smaller than a lower limit. In this ENGINE DRIVE & CHARGING mode, the engine 1 is operated even during running of the vehicle under a relatively low load, to operate the electric generator 3 for charging the battery 8 through the inverter 9.

The hybrid drive device is controlled in a selected one of the operating modes indicated above, by an electronic main control unit (main ECU) 10, an electronic engine control unit (engine ECU) 11, an electronic motor control unit (motor ECU) 12, an electronic battery control unit (battery ECU 13) and an electronic brake control unit (brake ECU) 14. Described more specifically, the engine 1, the electric motor 2 and the electric generator 3 are systematically controlled by the main ECU 10, which is arranged to calculate a required total output of the hybrid drive device on the basis of various physical quantities or parameters indicative of the operating conditions of the vehicle, and determine a required output of the engine 1 and a required output of the electric motor 2 and generator 3, namely, a distribution ratio of these required outputs with respect to each other, so as to meet the calculated required total output of the hybrid drive device for driving the vehicle. On the basis of the determined distribution ratio of the required outputs of the engine 1 and the electric motor 2 and generator 3, the main ECU 10 commands the engine ECU 11 and motor ECU 12 to suitably control the engine 1, electric motor 2 and electric generator 3.

The engine ECU 11 and the motor ECU 12 provide the main ECU 10 with information or signals indicative of the operating states of the engine 1, electric motor 2 and electric generator 3. To the main ECU 10, there are also connected the battery ECU 13 for controlling the battery 8, and the brake ECU 14 for controlling the vehicle braking system. The battery ECU 13 is arranged to monitor the battery 8 for its charging state, and if the amount of electric energy stored in the battery 8 is smaller than the lower limit, supplies the main ECU 10 with a battery charging command. When the main ECU 10 receives this battery charging command, the main ECU 10 commands the electric generator 3 to be operated to charge the battery 8. The brake ECU 14 is arranged to control the vehicle braking system, and cooperates with the main ECU 10 to control the electric motor 2 when serving as a regenerative brake.

In the hybrid vehicle provided with the hybrid drive device including the engine 1 and the electric motor 2 as drive power sources, the distribution ratio of the actual outputs of the engine 1 and the electric motor 2 can be changed as needed, without changing the actual total output of the hybrid drive device (actual total output of the vehicle). Namely, the output of the engine 1 can be reduced while increasing the output of the electric motor 2, and can be increased while reducing the output of the electric motor 2. The catalyst deterioration detecting apparatus according to this embodiment of the invention utilizes the ability to control the distribution ratio of the outputs of the engine 1 and the electric motor 2, as described below.

The catalyst deterioration detecting apparatus detects deterioration of a catalyst by various methods selected from various known methods. An example of such methods will now be described. The catalyst deterioration detecting apparatus adapted to diagnose the emission purifying catalyst 29 of the engine 1 includes the engine ECU 11, an upstream air/fuel ratio sensor 23 and a downstream air/fuel ratio sensor 30, which are disposed on respective upstream and downstream sides of the catalyst 29, as shown in Fig. 2. The catalyst deterioration detecting apparatus may be arranged as disclosed in JP-A-9-144532 identified above. Briefly, the apparatus is arranged to diagnose the catalyst 29 on the basis of lengths of voltage waveforms or curves representing periodic changes in the output voltage of the upstream and downstream air/fuel ratio sensors 23, 30, within a predetermined length of time, and on the basis of surface areas enclosed by the above-indicated voltage waveforms and respective straight reference lines representing respective predetermined reference values of the output voltages of the sensors 23, 30, within the predetermined length of time. Each of these two voltage waveforms is expressed in a rectangular coordinate system in which the output voltage is taken along an ordinate while the time is taken along an abscissa. The length of each voltage waveform may be replaced by a sum of successive amounts of change of the output voltage of the corresponding air/fuel ratio sensor 23, 30 in respective successive unit times a sum of which is equal to the predetermined time indicated above. The straight reference line representing the predetermined reference value of the output voltage of each sensor 23, 30 is parallel to the abscissa, and the reference value is selected such that the output curve has portions which are alternately located above and below the straight reference line in question. The above-indicated surface area of each sensor 23, 30 output may be replaced by a sum of successive amounts of difference of the output voltage from the reference value at respective points of time having a predetermined time interval corresponding to each unit time indicated above. Described more precisely, a diagnosis as to whether the catalyst 29 is in a deteriorated functional state is based on a ratio of the length of the voltage waveform of the downstream air/fuel ratio sensor 30 to that of the voltage waveform of the upstream air/fuel ratio sensor 23, and on a ratio of the surface area of the output waveforms of the downstream sensor 30 to that of the upstream sensor 23, while the air/fuel ratio of the air-fuel mixture introduced into the engine 1 is controlled in a feedback fashion. These ratios of the lengths and surface areas are used as diagnostic parameters for diagnosing the catalyst 29. The disclosure of JP-A-9-144532 is incorporated herein by reference in its entirety.

The air/fuel ratio of the air-fuel mixture is controlled according to a control program stored in a read-only memory of the engine ECU 11, based on output signals of the upstream and downstream air/fuel ratio sensors 23, 30 described above, and based on output signals of an air flow meter 24, a crank position sensor 25, a throttle opening sensor 26 and so on. The output signals of the air/fuel ratio sensors 23, 30 change with the oxygen concentration of exhaust gas emitted from the engine 1. On the basis of the output signals of the sensors 23, 30, the engine ECU 11 determines that the air-fuel mixture burned in the engine 1 is fuel-rich, fuel-lean or stoichiometric, that is, determines that the air/fuel ratio of the mixture is lower or higher than the stoichiometric value or equal to the stoichiometric value.

As shown in Fig. 2, the air flow meter 24 is provided at a suitable position along an intake passage 27 of the engine 1, to detect the flow rate of intake air introduced into the engine 1. In the present embodiment, the air flow meter 24 is of the hot-wire type. The crank position sensor 25 is provided to detect a rotary position of the crankshaft 15 of the engine 1. The revolving speed of the engine 1 can be calculated on the basis of the output signal of the crank position sensor 25. The throttle opening sensor 26 is provided to detect the opening of a throttle valve of the engine provided in the intake passage 27. On the basis of the output signals of the sensors 23-26 and 30 described above, the engine ECU 11 controls the air-fuel ratio of the air-fuel mixture of the engine 1 in a feedback fashion, and at the same time diagnoses the catalyst 29 to determine whether the catalyst 29 is in a deteriorated functional state.

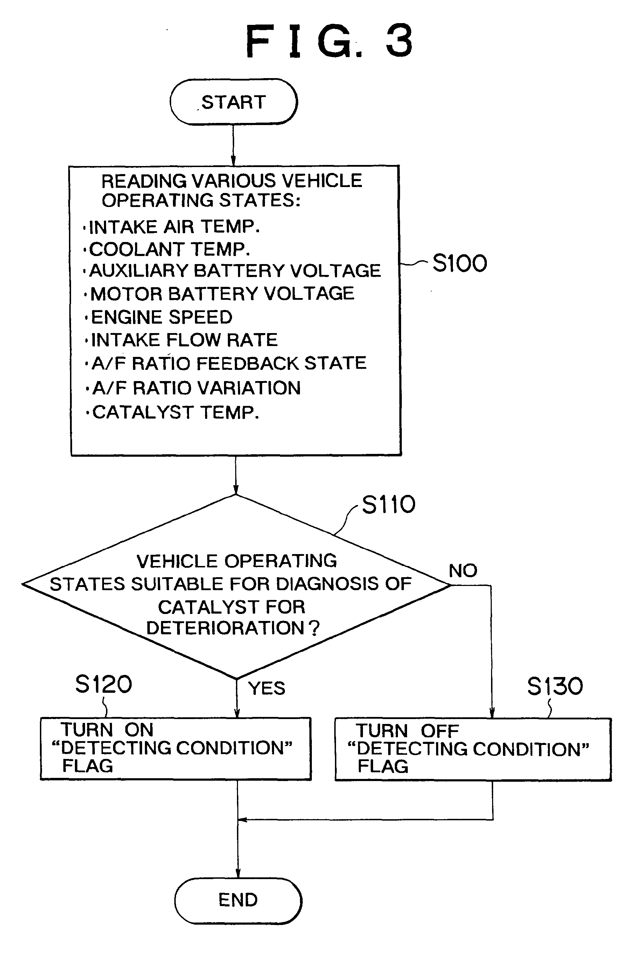

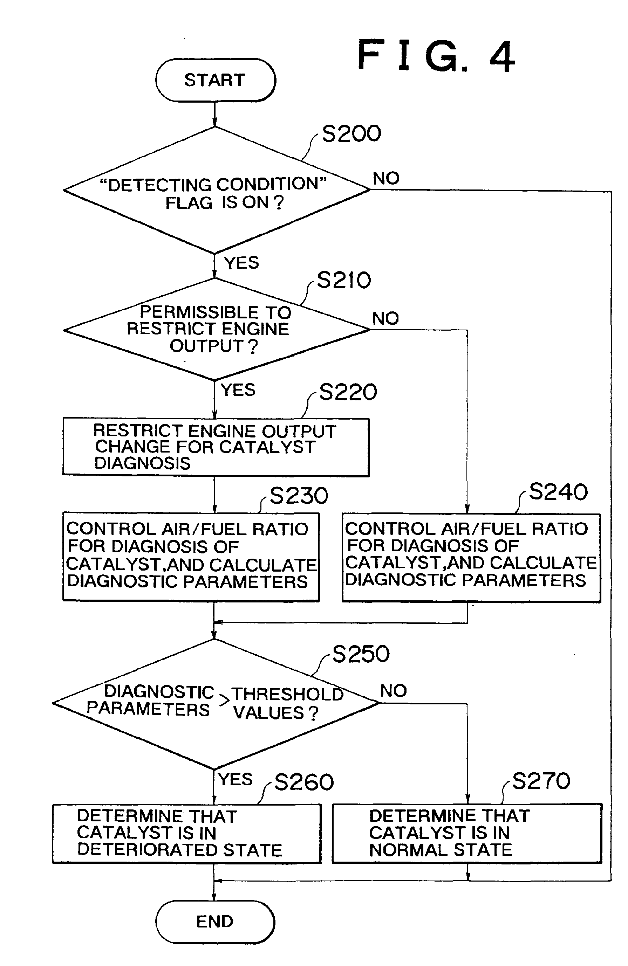

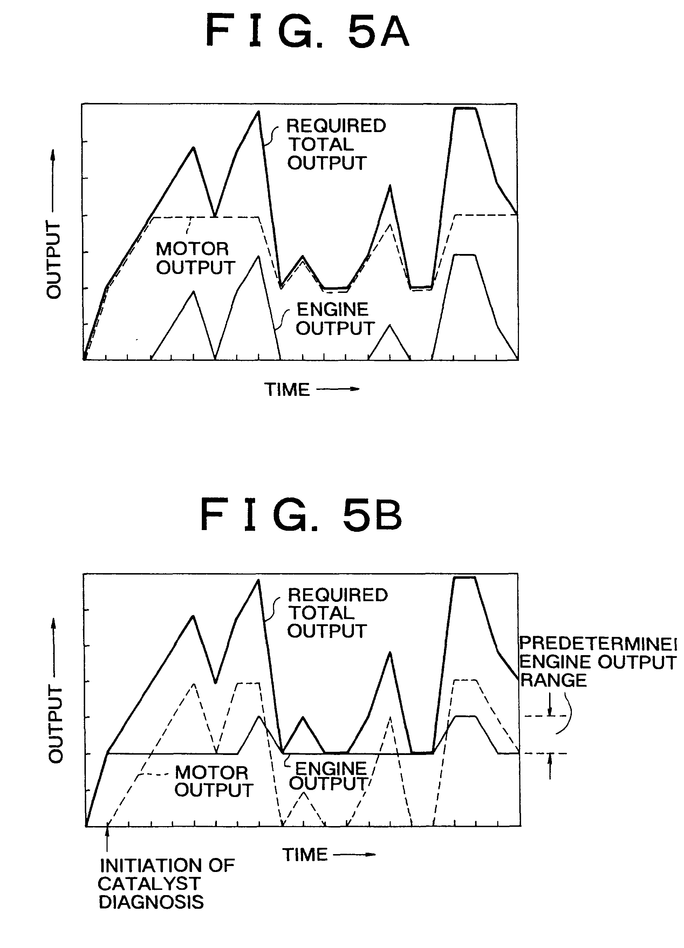

Referring to the flowcharts of Figs. 3 and 4 and the graphs of Figs. 5A and 5B, there will be described the diagnosis of the catalyst 29. The catalyst deterioration detecting apparatus according to this embodiment is arranged to initiate normal diagnosis of the catalyst 29 when the engine 1 (vehicle) is in operating states suitable for diagnosing the catalyst 29. The normal diagnosis is effected while the engine 1 is held in this operating state. The apparatus is further arranged to effect compulsory diagnosis when predetermined conditions for initiating the compulsory diagnosis are satisfied.

When the compulsory diagnosis of the catalyst 29 is effected, the operating state of the engine 1 is made suitable for detection of deterioration of the catalyst 29 if the engine operation state upon the start of the diagnosis is not suitable for detection of catalyst deterioration. For example, if the operating state of the engine 1 is not suitable for diagnosing the catalyst 29, the distribution ratio of the output of the electric motor 2 with respect to the required total output is controlled so as to bring the operating state of the engine 1 into the operating state that is suitable for diagnosing the catalyst 29, or if the engine 1 is stopped, the engine 1 is started and then its operating state is brought into the operating state that is suitable for diagnosing the catalyst 29.

The normal diagnosis of the catalyst 29 when the engine 1 is in the operating state suitable for diagnosing the catalyst 29 will be described first.

The flowchart of Fig. 3 shows the routine executed to determine whether the engine 1 is in the operating state suitable for diagnosing the catalyst 29, and turn on or off a DETECTING CONDITION flag depending upon whether the engine 1 is in the suitable operating state or not. The routine is initiated with step S100 in which the engine ECU 11 reads various operating states or conditions of the vehicle (engine 1), such as the temperatures of the intake air and coolant of the engine 1, the voltage of the battery 8, the voltage of a battery for accessories, the revolving speed and intake flow rate of the engine 1, the state of the feedback control of the air/fuel ratio of the air-fuel mixture of the engine 1, the state of change of the air/fuel ratio, and the temperature of the catalyst 29. The battery for accessories is provided in addition to the battery 8 for operating the electric motor 2, to operate other electrically operated devices, or accessories, provided on the vehicle. The voltage of the battery 8 is detected by the battery ECU 13, and the speed of the engine 1 is obtained from the output signal of the crank position sensor 25. The intake flow rate of the engine I is detected by the air flow meter 24, and the state of the feedback control of the air/fuel ratio and the state of change of the air/fuel ratio are detected on the basis of the output signals of the air/fuel ratio sensors 23, 30.

Then, the control process proceeds to step S110 to determine whether the vehicle operating states detected in step S100 are suitable for diagnosing the catalyst 29. In this embodiment in which the diagnosis of the catalyst 29 is effected on the basis of the output voltages of the air/fuel ratio sensors 23, 30, the catalyst 29 cannot be diagnosed with high accuracy while the output of the engine 1 is considerably changing, since the air/fuel ratio of the air-fuel mixture is also considerably changing in this state of the engine 1. Further, the diagnosis of the catalyst 29 is not initiated while the air/fuel ratio of the air-fuel mixture is not controlled in the feedback fashion, since the present catalyst deterioration detecting apparatus is arranged to diagnose the catalyst 29 during the feedback control of the air/fuel ratio.

If the vehicle operating states are suitable for effecting the diagnosis of the catalyst 29, an affirmative decision (YES) is obtained in step S110, and the control process proceeds to step S120 to turn ON the DETECTING CONDITION flag. If the vehicle operating states are not suitable for effecting the diagnosis of the catalyst 29, a negative decision (NO) is obtained in step S110, and the control process proceeds to step S130 to turn OFF the DETECTING CONDITION flag. The routine of Fig. 3 is executed cyclically (e.g., every several to several hundred milliseconds) by the main ECU 10 according to a control program stored in its ROM, so that the DETECTING CONDITION flag is turned ON or OFF in each cycle of execution of the routine.

Concurrently with the routine of Fig. 3, a routine illustrated in the flowchart of Fig. 4 is executed to determine whether the catalyst 29 is in a deteriorated functional state. This routine is also executed cyclically by the main ECU 10, according to a control program also stored in the ROM. The routine of Fig. 4 is initiated with step S200 to determine whether the DETECTING CONDITION flag is placed in the ON state. If this flag is not placed in the ON state, it means that the vehicle (engine 1) is not placed in the operating states suitable for diagnosing the catalyst 29. In this case, one cycle of execution of the routine of Fig. 4 is terminated. If the DETECTING CONDITION flag is placed in the ON state, it means that the vehicle (engine 1) is placed in the operating states suitable for diagnosing the catalyst 29. In this case, the control process goes to step S210 to determine whether it is permissible to restrict the output of the engine 1, more precisely, to restrict the amount of change of the output of the engine 1 or hold the output of the engine 1 within a predetermined relatively narrow range.

Under some vehicle operating conditions in which the engine 1 is controlled for a purpose other than the diagnosis of the catalyst 29 or any device other than the engine 1 is controlled, it is not desirable to restrict the output of the engine 1 to within the predetermined narrow range or to limit the maximum amount of change of the output of the engine 1. In view of these vehicle operating conditions, step S210 is provided to determine whether the restriction of the output of the engine 1 is permissible. If the present vehicle operating condition permits the restriction of the engine output, the control process proceeds to step S220 to restrict the output of the engine 1 to within the predetermined narrow range suitable for diagnosing the catalyst 29 with high accuracy.

Normally, the output of the engine 1 is determined on the basis of various detected vehicle operating states and according to a normal control data map stored in the ROM of the main ECU 10 or engine ECU 11. In the hybrid vehicle, the distribution ratio of the output of the engine 1 with respect to the output of the electric motor 2 is determined according to this normal control data map, which is used while the catalyst deterioration detecting apparatus is not in operation to diagnose the catalyst 29. According to the normal control data map, the output of the engine 1 is determined on the basis of various factors such as the fuel economy of the vehicle and the amount of electric energy stored in the battery 8. Accordingly, the output of the engine 1 as determined according to the normal control data map is not necessarily held within a relatively narrow range, and tends to vary by a relatively large amount, as indicated in the graph of Fig. 5A by way of example. The catalyst 29 cannot be diagnosed with high accuracy if the diagnosis is effected while the output of the engine 1 is varying considerably as indicated in Fig. 5A. When the catalyst 29 is diagnosed, therefore, the output of the engine I is restricted so as to be held within the predetermined relatively narrow range, as indicated in the graph of Fig. 5B.

The required total output of the hybrid drive device (engine 1 and electric motor 2) is provided by a sum of the output of the engine 1 and the output of the electric motor 2. In the example of Fig. 5A according to the normal control data map, the output of the electric motor 2 constitutes a major portion of the required total output, and a difference of the output of the electric motor 2 from the required total output is provided by the output of the engine 1. During running of the vehicle at a relatively low speed, for instance, the predominant use of the electric motor 2 and the supplemental use of the engine 1 permit a higher degree of vehicle running efficiency (e.g., better fuel economy). Accordingly, the normal control data map is formulated to determine the distribution ratio of the outputs of the engine 1 and'electric motor 2, as indicated in Fig. 5A. In this example, the engine 1 is intermittently operated, and the output of the engine 1 varies to a large extent. In this operating condition of the engine 1, the catalyst deterioration detecting apparatus is not able to diagnose the catalyst 29 with high accuracy.

Based on the finding indicated above, the distribution ratio of the outputs of the engine 1 and electric motor 2 during the diagnosis of the catalyst 29 is determined according to a diagnostic control data map such that the output of the engine I is held within the predetermined relatively narrow range, as indicated in the graph of Fig. 5B, which shows an example in which the required total output of the hybrid drive device is the same as in the example of Fig. 5A according to the normal control data map. According to the diagnostic control data map, the amount of change of the output of the engine I is held within the predetermined narrow range, and the change of the required total output is attained primarily by changing the output of the electric motor 2. To hold the output of the engine 1 within the predetermined narrow range, the engine 1, which is held at rest for some periods of time according to the normal control data map as indicated in Fig. 5A, is positively operated according to the diagnostic control data map as indicated in Fig. 5B. Thus, the engine 1 controlled according to the diagnostic data map of Fig. 5B facilitates the diagnosis of the catalyst 29.

In step S220 indicated above, the normal control data map is replaced by the diagnostic control data map, to determine the outputs of the engine 1 and electric motor 2, so that the engine 1 is operated as indicated in the graph of Fig. 5B and the diagnosis of the catalyst 29 is initiated. Step S220 is followed by step S230 in which the air/fuel ratio of the air-fuel mixture of the engine 1 is controlled in the feedback fashion for the purpose of diagnosing the catalyst 29 or detecting catalyst deterioration, as described above, and the diagnostic parameters (the ratio of the length values of the output voltage waveforms of the air/fuel ratio sensors 23, 30, and the ratio of the surface areas enclosed by the waveforms and the reference straight lines) are calculated. The control of the air/fuel ratio of the air-fuel mixture is performed by positively changing the period (or magnitude in some cases) of variations or changes in the air/fuel ratio of the exhaust gas introduced into the catalyst 29, in order to facilitate the diagnosis of the catalyst 29 for determining whether the catalyst 29 is in a deteriorated functional state. The diagnostic parameters may be any parameters in addition to (or instead of) the above-indicated ratios of the length values and surface areas associated with the output signals of the air/fuel ratio sensors 23, 30.

If a negative decision (NO) is obtained in step S210, that is, if the restriction of the output of the engine 1 is not permissible, the control process proceeds to step S240 which is the same as the step S230. Thus, the diagnosis of the catalyst 29 is initiated without executing step S220, that is, without restricting the output of the engine 1. When step S210 is executed according to the DETECTING CONDITION flag placed in the ON state, the engine 1 is placed in a condition suitable for diagnosing the catalyst 29, so that the diagnosis of the catalyst 29 is possible on the basis of the diagnostic parameters calculated in step S240 during the feedback control of the air/fuel ratio of the air-fuel mixture, without positively restricting the output of the engine 1 within the predetermined range.

Steps S230 and S240 are followed by step S250 to determine whether the calculated diagnostic parameters are larger than respective threshold values. In this embodiment, in which the above-indicated ratios of the length values and surface areas are used, the control process proceeds to step S260 to determine that the catalyst 29 is in a deteriorated functional state if the ratios are higher than the threshold values. If the ratios are not higher than the threshold values, the control process proceeds to step S270 to determine that the catalyst 29 is in a normal operating state. While steps S250, S260, S270 are formulated to diagnose the catalyst 29 by simply comparing the calculated diagnostic parameters with the threshold values, it is possible to diagnose the catalyst 29 according to a predetermined two-dimensional or three-dimensional data map stored in the main ECU 10 (or engine ECU 11) and on the basis of the above-indicated two ratio values and/or any other parameter selected as desired.

The normal diagnosis of the catalyst 29 which has been described above is implemented when the DETECTING CONDITION flag is in the ON state, that is, when the vehicle (engine 1) is in a condition suitable for diagnosing the catalyst 29. The compulsory diagnosis of the catalyst 29 indicated above will now be described. The compulsory diagnosis is implemented when the DETECTING CONDITION flag is in the OFF state. In the compulsory diagnosis, the engine 1 is controlled in a predetermined fashion, for the purpose of facilitating the diagnosis of the catalyst 29.

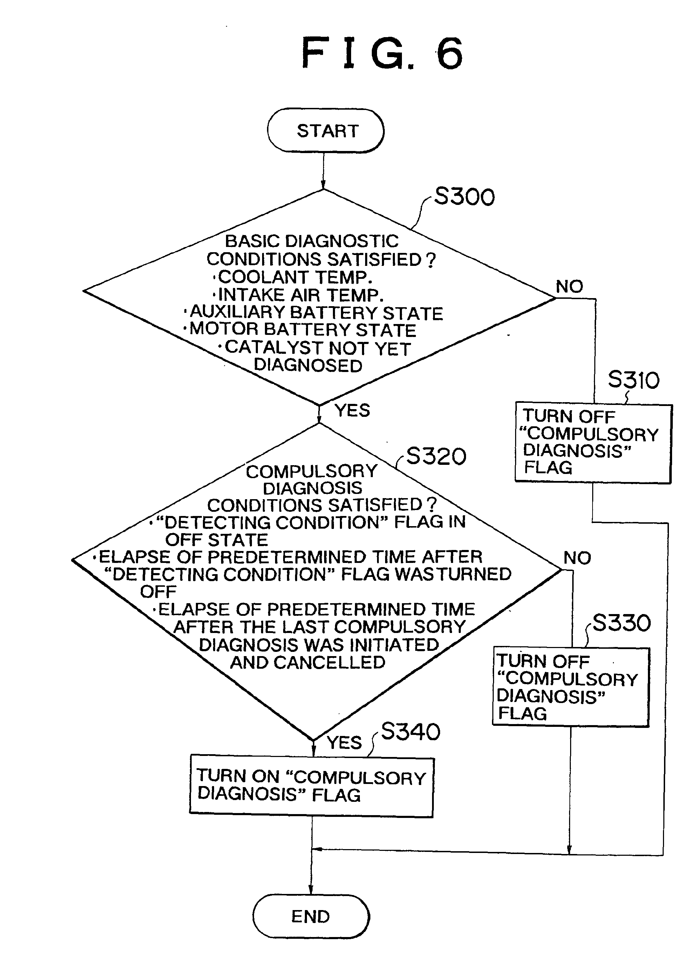

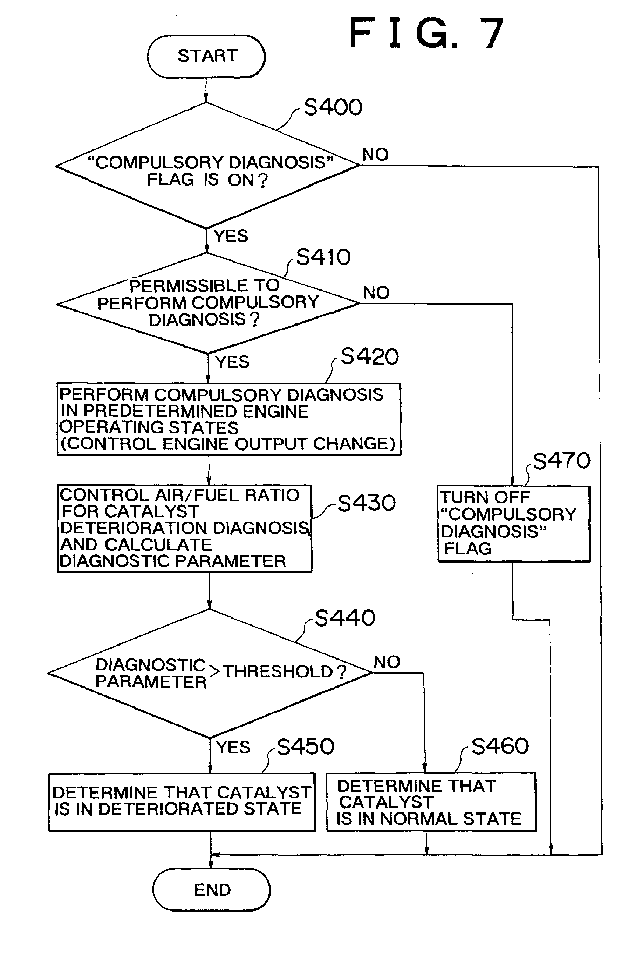

The normal diagnosis is not initiated unless the vehicle (engine 1) is brought into a condition suitable for the diagnosis. Although deterioration of the catalyst 29 is normally detected by effecting the normal diagnosis as described above, the compulsory diagnosis permits the catalyst 29 to be diagnosed at least once even while the vehicle is not brought into the condition suitable for the normal diagnosis. The compulsory diagnosis is to be initiated at a point of time as early as possible after the engine 1 is started. The normal diagnosis may follow the compulsory diagnosis. In this case, the result of the normal diagnosis may replace that of the compulsory diagnosis. The compulsory diagnosis may also be effected at predetermined time intervals, or each time the number of operating cycles or ignition cycles of the engine 1 has reached a predetermined value, for example. The compulsory diagnosis of the catalyst 29 will be described by reference to the flowcharts of Figs. 6 and 7.

The routine illustrated in the flowchart of Fig. 6 is executed cyclically (e.g., every several to several hundred milliseconds) by the main ECU 10 according to a control program stored in the ROM, to turn on or off a COMPULSORY DIAGNOSIS flag depending upon whether the compulsory diagnosis should be performed. The routine of Fig. 6 is initiated with step S300 to determine whether predetermined basic diagnostic conditions of the vehicle (engine 1) are satisfied. The basic diagnostic conditions are satisfied when the temperatures of the coolant and intake air of the engine 1 are higher than thresholds, when the battery for accessories and the battery 8 for the electric motor 2 are placed in a state suitable for the diagnosis, and when the catalyst 29 has not yet been diagnosed.

If the basic diagnostic conditions are not satisfied in step S300, or if the catalyst 29 has already been diagnosed, a negative decision (NO) is obtained in step S300, and the control process proceeds to step S310 to turn off the COMPULSORY DIAGNOSIS flag. If the basic diagnostic conditions are satisfied, the control process proceeds to step S320 to determine whether predetermined compulsory diagnosis conditions are satisfied. These compulsory diagnosis conditions are satisfied when the DETECTING CONDITION flag is placed in the OFF state (see step S130 of Fig. 3), after a predetermined time has passed after the DETECTING CONDITION flag was turned off, and after a predetermined time has passed after the last compulsory diagnosis was initiated and cancelled. The determination as to whether a predetermined time has passed after the DETECTING CONDITION flag was turned off may be made by determining whether a predetermined time has passed after the DETECTING CONDITION flag was turned on during the last or preceding operation (or last trip) of the engine (or vehicle) and then turned off, or after the ignition switch was turned on.

The DETECTING CONDITION flag placed in the OFF state means that the normal diagnosis is not being performed. If the normal diagnosis is being performed, the compulsory diagnosis is not performed. After the predetermined time has passed after the DETECTING CONDITION flag was turned off, this flag is relatively unlikely to be turned on. In other words, immediately after the flag is turned off, the flag is relatively likely to be turned on, so that the normal diagnosis is relatively likely to be initiated. In this case, the compulsory diagnosis is not performed, to wait for the initiation of the normal diagnosis. If the predetermined time has passed after the flag was turned off, it means that the normal diagnosis is relatively unlikely to be initiated.

The compulsory diagnosis may be initiated and cancelled, or interrupted, for some reason or other, as described later referring to steps S410 and S470 in Fig. 7. After the predetermined time has passed after the last compulsory diagnosis was initiated and cancelled, the compulsory diagnosis if initiated is relatively unlikely to be cancelled. In other words, immediately after the last compulsory diagnosis was initiated and cancelled, the compulsory diagnosis if initiated is relatively likely to be cancelled again. In this case, the compulsory diagnosis is not initiated.

If the compulsory diagnosis conditions are not satisfied, a negative decision (NO) is obtained in step S320, and the control process proceeds to step S330 to turn off the COMPULSORY DIAGNOSIS flag. If the compulsory diagnosis conditions are satisfied, an affirmative decision (YES) is obtained in step S320, and the control process proceeds to step S340 to turn on the COMPULSORY DIAGNOSIS flag. This flag is turned on or off in each cycle of execution of the routine of Fig. 6, depending upon the operating states of the vehicle (engine 1).

The compulsory diagnosis is carried out according to the routine illustrated in the flowchart of Fig. 7, which is executed along with the routine of Fig. 6 cyclically (e.g., every several to several hundred milliseconds) according to a control program stored in the ROM of the main ECU 10. The routine of Fig. 7 is initiated with step S400 to determine whether the COMPULSORY DIAGNOSIS flag is in the ON state. If a negative decision (NO) is obtained in step S400, it means that the compulsory diagnosis of the catalyst 29 should not be performed. In this case, one cycle of execution of the routine of Fig. 7 is terminated. If the COMPULSORY DIAGNOSIS flag is in the ON state, an affirmative decision (YES) is obtained in step S400, and the control process proceeds to step S410 to determine whether it is permissible to effect the compulsory diagnosis.

The step S410 is similar to the step S210 of Fig. 4. Under some vehicle operating conditions in which the engine 1 is controlled for a purpose other than the diagnosis of the catalyst 29 or any device other than the engine 1 is controlled, it is not desirable to effect the compulsory diagnosis. In view of this, step S410 is provided to determine whether the compulsory diagnosis is permissible under the present condition of the vehicle (engine 1). If an affirmative decision (YES) is obtained in step S410, the control process proceeds to step S420 to operate the engine 1 in a state suitable for diagnosing the catalyst 29.

In step S420, the normal control data map is replaced by a compulsory diagnosis data map, so that the output of the engine 1 is controlled to be held within a predetermined relatively narrow range, as described above with respect to the normal diagnosis by reference to Figs. 5A and 5B. If the engine 1 is at rest upon execution of step S420, the engine 1 is started and the output of the engine 1 is controlled to be held within the predetermined range, depending upon the vehicle condition. If the output of the engine 1 is outside the predetermined range upon execution of step S420, the output of the engine 1 is controlled to become within the predetermined range. Then, the control process proceeds to step S430 to control the air/fuel ratio of the air-fuel mixture for the purpose of diagnosing the catalyst 29, and calculate the diagnostic parameters, as described above with respect to step S250.

Subsequently, the control process proceeds to step S440 to determine whether the calculated diagnostic parameters are larger than respective thresholds. If the diagnostic parameters are larger than the thresholds, it means that the catalyst 29 has been deteriorated or degraded. In this case, the control process proceeds to step S450 to determine that the catalyst 29 is in a deteriorated functional state. If the diagnostic parameters are not larger than the thresholds, it means that the catalyst 29 is in a normal state. In this case, the control process proceeds to step S460 to determine that the catalyst 29 is normal. As described above with respect to the normal diagnosis, it is possible to diagnose the catalyst 29 according to a predetermined two-dimensional or three-dimensional data map stored in the main ECU 10 (or engine ECU 11) and on the basis of the calculated diagnostic parameters, and any other parameter selected as desired.

If the compulsory diagnosis is not permissible, that is, if a negative decision (NO) is obtained in step S410, the control process proceeds to step S470 to turn off the COMPULSORY DIAGNOSIS flag, and terminate one cycle of execution of the routine.

While the catalyst deterioration detecting apparatus according to the above embodiment of the invention has been described above with reference to the accompanying drawings, it is to be understood that the invention may be otherwise embodied. For instance, only the normal diagnosis may be performed while the engine 1 or vehicle is in a condition suitable for diagnosing the catalyst 29. Namely, it is not essential to effect the compulsory diagnosis in which the engine 1 is brought into an operating state suitable for the diagnosis, when the engine 1 is not in a state suitable for the normal diagnosis. However, the arrangement to perform the compulsory diagnosis when the normal diagnosis is not implemented is preferable in that the deterioration of the catalyst 29 can be detected with higher accuracy and at an early point of time.

In the illustrated embodiment, when the output of the internal combustion engine is restricted to within the predetermined range during the diagnosis of the catalyst 29 for detecting catalyst deterioration, the electric motor serves to compensate for a deficiency in the total output required for driving the vehicle, so that a sum of the outputs of the engine and the motor becomes equal to the total required output. However, the invention is not limited to the use of the electric motor for reducing an amount of change of the output of the engine while providing the required total output. For example, the amount of change (or variation) in the output of the engine may be reduced to some extent, by adjusting the amount of the output of the engine consumed by an external load, such as an alternator (generator) provided in the engine, a power steering pump, or a compressor of an air condition of the vehicle. In this case, the external load, such as an alternator, serves as the output adjusting device that cooperates with the engine to provide the required total output that is required for driving the vehicle.

In the illustrated embodiment, the apparatus is controlled by one or more controllers (e.g., the ECUs 10 and 11), which are implemented as a programmed general purpose computer. It will be appreciated by those skilled in the art that the controllers can be implemented using a single special purpose integrated circuit (e.g., ASIC) having a main or central processor section for overall, system-level control, and separate sections dedicated to performing various different specific computations, functions and other processes under control of the central processor section. The controllers can be a plurality of separate dedicated or programmable integrated or other electronic circuits or devices (e.g., hardwired electronic or logic circuits such as discrete element circuits, or programmable logic devices such as PLDs, PLAs, PALs or the like). The controllers can be implemented using a suitably programmed general purpose computer, e.g., a microprocessor, microcontroller or other processor device (CPU or MPU), either alone or in conjunction with one or more peripheral (e.g., integrated circuit) data and signal processing devices. In general, any device or assembly of devices on which a finite state machine capable of implementing the procedures described herein can be used as the controller. A distributed processing architecture can be used for maximum data/signal processing capability and speed.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

A catalyst deterioration detecting apparatus and method detects a deteriorated functional state of an catalyst (29) provided in an exhaust passage (28) of an internal combustion engine (1) of a vehicle. A controller (10) of the vehicle calculates a required total output that is required for driving the vehicle, and an output adjusting device (2), such as, for example, an electric motor, cooperates with the engine to provide the required total output. The catalyst is diagnosed so as to determine whether the catalyst is in a deteriorated functional state. During the diagnosis of the catalyst, the controller restricts the output of the engine to be held within a predetermined range, and changes the output of the output adjusting device as needed so as to provide the required total output.

## Claims

1. A catalyst deterioration detecting apparatus for detecting a deteriorated functional state of a catalyst (29) provided in an exhaust passage (28) of an internal combustion engine (1) of a vehicle, the vehicle further including an output adjusting device (2) that cooperates with the internal combustion engine to provide a predetermined total output that is required for driving the vehicle, the apparatus comprising:
means for performing a diagnostic operation to diagnose the catalyst so as to determine whether the catalyst is in a deteriorated functional state; and
means for restricting the output of the internal combustion engine to be held within a predetermined range, and changing the output of the output adjusting device to provide the predetermined total output, during the performance of the diagnostic operation.

2. The apparatus according to claim 1, further comprising:
means for detecting a plurality of operating conditions of the vehicle; and
means for initiating the performance of the diagnostic operation when the detected operating conditions of the vehicle are suitable for diagnosing the catalyst (29).

3. The apparatus according to claim 1, further comprising:
means for detecting a plurality of operating conditions of the vehicle; and
means for initiating performance of a compulsory diagnostic operation when the detected operating conditions of the vehicle are not suitable for diagnosing the catalyst (29);
wherein the output of the internal combustion engine is restricted upon initiation of the compulsory diagnostic operation so that the output of the internal combustion engine is held within the predetermined range.

4. The apparatus according to claim 3, wherein the compulsory diagnostic operation is initiated under a predetermined condition.

5. The apparatus according to claim 1, wherein:
the vehicle has a hybrid drive including the internal combustion engine (1) and an electric motor (2), and the output adjusting device comprises the electric motor;
an output of the internal combustion engine and an output of the electric motor are controlled depending upon an operating state of the vehicle; and
during the performance of the diagnostic operation, the outputs of the internal combustion engine and of the electric motor are controlled irrespective of the calculated outputs, so as to restrict the output of the internal combustion engine and change the output of the electric motor such that a sum of the restricted output of the internal combustion engine and the changed output of the electric motor is equal to the predetermined total output.

6. The apparatus according to claim 5, further comprising:
means for detecting a plurality of operating conditions of the vehicle; and
means for initiating the performance of the diagnostic operation when the detected operating conditions of the vehicle are suitable for diagnosing the catalyst (29).

7. The apparatus according to claim 5, further comprising:
means for detecting a plurality of operating conditions of the vehicle; and
means for initiating performance of a compulsory diagnostic operation when the detected operating conditions of the vehicle are not suitable for diagnosing the catalyst (29);
wherein the output of the internal combustion engine is restricted upon initiation of the compulsory diagnostic operation so that the output of the internal combustion engine is held within the predetermined range.

8. The apparatus according to claim 7, wherein the compulsory diagnostic operation is initiated under a predetermined condition.

9. The apparatus according to any one of claims 1-8, wherein the output of the internal combustion engine (1) is controlled such that an amount of change of the output of the internal combustion engine is smaller than a predetermined maximum value.

10. The apparatus according to any one of claims 1-9, wherein the output of the internal combustion engine is controlled such that the output of the internal combustion engine (1) is kept larger than zero, throughout the performance of the diagnostic operation.

11. A hybrid vehicle comprising:
an internal combustion engine (1) including an exhaust passage (28) having a catalyst (29) therein;
an electric motor (2), the internal combustion engine and the electric motor coupled to drive wheels (7) of the vehicle by a transmission (4), the electric motor cooperating with the internal combustion engine to provide a predetermined total output to the drive wheels;
means for performing a diagnostic operation to diagnose the catalyst so as to determine whether the catalyst is in a deteriorated functional state; and
means for restricting the output of the internal combustion engine to be held within a predetermined range, and changing the output of the electric motor to provide the predetermined total output, during the performance of the diagnostic operation.

12. The hybrid vehicle according to claim 11, further comprising:
means for detecting a plurality of operating conditions of the vehicle; and
means for initiating the performance of the diagnostic operation when the detected operating conditions of the vehicle are suitable for diagnosing the catalyst (29).

13. The hybrid vehicle according to claim 11 or claim 12, wherein the output of the internal combustion engine is controlled such that an amount of change of the output of the internal combustion engine is smaller than a predetermined maximum value.

14. The hybrid vehicle according to any one of claims 11-13, wherein the output of the internal combustion engine is controlled such that the output of the internal combustion engine is kept larger than zero, throughout the performance of the diagnostic operation.

15. A catalyst deterioration detecting method for detecting a deteriorated functional state of a catalyst (29) provided in an exhaust passage (28) of an internal combustion engine (1) of a vehicle, the vehicle including an output adjusting device (2) that cooperates with the internal combustion engine to provide a predetermined total output that is required for driving the vehicle, the method comprising:
performing a diagnostic operation to diagnose the catalyst so as to determine whether the catalyst is in a deteriorated functional state; and
during the performance of the diagnostic operation, restricting the output of the internal combustion engine to be held within a predetermined range, and changing the output of the output adjusting device to provide the predetermined total output.

16. The method according to claim 15, further comprising:
detecting a plurality of operating conditions of the vehicle; and
initiating the performance of the diagnostic operation when the detected operating conditions of the vehicle are suitable for diagnosing the catalyst.

17. The method according to claim 15, further comprising:
detecting a plurality of operating conditions of the vehicle; and
initiating performance of a compulsory diagnostic operation when the detected operating conditions of the vehicle are not suitable for diagnosing the catalyst;
wherein, upon initiation of the compulsory diagnostic operation, the output of the internal combustion engine is restricted so that the output of the internal combustion engine is held within the predetermined range.

18. The method according to claim 17, wherein the compulsory diagnostic operation is initiated under a predetermined condition.

19. The method according to claim 15, wherein the vehicle has a hybrid drive including the internal combustion engine (1) and an electric motor (2), and the output adjusting device comprises the electric motor; and the method further comprises:
calculating an output of the internal combustion engine and an output of the electric motor depending upon an operating state of the vehicle; and
during the performance of the diagnostic operation, controlling the outputs of the internal combustion engine and of the electric motor, irrespective of the calculated outputs, so as to restrict the output of the internal combustion engine and changes the output of the electric motor such that a sum of the restricted output of the internal combustion engine and the changed output of the electric motor is equal to the predetermined total output.

20. The method according to claim 19, further comprising:
detecting a plurality of operating conditions of the vehicle; and
initiating the performance of the diagnostic operation when the detected operating conditions of the vehicle are suitable for diagnosing the catalyst.

21. The method according to claim 19, further comprising:
detecting a plurality of operating conditions of the vehicle; and
initiating performance of a compulsory diagnostic operation when the detected operating conditions of the vehicle are not suitable for diagnosing the catalyst;
wherein, upon initiation of the compulsory diagnostic operation, the output of the internal combustion engine is restricted so that the output of the internal combustion engine is held within the predetermined range.

22. The method according to claim 21, wherein the compulsory diagnostic operation is initiated under a predetermined condition.

23. The method according to any one of claims 15-22, wherein the output of the internal combustion engine is controlled such that an amount of change of the output of the internal combustion engine is smaller than a predetermined maximum value.

24. The method according to any one of claims 15-23, wherein the output of the internal combustion engine is controlled such that the output of the internal combustion engine is kept larger than zero, throughout the performance of the diagnostic operation.
